(19) Europäisches Patentamt
European Patent Office
Office européen des brevets

(11) **EP 4 318 684 A1**

(12) **EUROPEAN PATENT APPLICATION**
published in accordance with Art. 153(4) EPC

(43) Date of publication:
**07.02.2024 Bulletin 2024/06**

(21) Application number: **22780284.0**

(22) Date of filing: **22.03.2022**

(51) International Patent Classification (IPC):
**H01M 4/86** *(2006.01)*    **H01M 4/88** *(2006.01)*
**H01M 4/96** *(2006.01)*    **H01M 8/10** *(2016.01)*

(52) Cooperative Patent Classification (CPC):
**H01M 4/86; H01M 4/88; H01M 4/96; H01M 8/10;**
Y02E 60/50

(86) International application number:
**PCT/JP2022/012991**

(87) International publication number:
**WO 2022/210069 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021059748**

(71) Applicant: **Toray Industries, Inc.**
**Tokyo 103-8666 (JP)**

(72) Inventors:
• **OTAKE, Hiroaki**
  **Otsu-shi, Shiga 520-8558 (JP)**
• **UTSUNOMIYA, Masamichi**
  **Otsu-shi, Shiga 520-8558 (JP)**
• **WATANABE, Fumitaka**
  **Otsu-shi, Shiga 520-8558 (JP)**

(74) Representative: **Mewburn Ellis LLP**
**Aurora Building**
**Counterslip**
**Bristol BS1 6BX (GB)**

(54) **ELECTRODE BASE MATERIAL AND METHOD FOR PRODUCING SAME**

(57) An object of the present invention is to provide an electrode substrate that maintains electrical conductivity and achieves both a high drainage performance and any one of a high gas diffusivity and spring property. To achieve the above-described object, an electrode substrate according to the present invention is an electrode substrate including a carbon fiber sheet having pores filled with a fluoropolymer and carbon fine powder, wherein, in terms of a fluorine/carbon ratio (F/C), the ratio of the smallest value ($F/C_{min}$) to the largest value ($F/C_{max}$) of the average value (F/C-1) in one surface of the electrode substrate, the average value (F/C-2) in the central plane in the thickness direction, and the average value (F/C-3) in the other surface is 0.80 or more, and wherein, in a pore size distribution, the electrode substrate has at least a first peak present in the range of pore size of 0.5 $\mu$m or more and less than 120 $\mu$m and a second peak present in the range of pore size of 10 nm or more and less than 0.5 $\mu$m, and the ratio (V1/V2) of the peak volume (V1) of the first peak to the peak volume (V2) of the second peak is 1.0 to 7.0.

EP 4 318 684 A1

## Description

TECHNICAL FIELD

The present invention relates to an electrode substrate and a method of producing the same.

BACKGROUND ART

In recent years, a fuel cell for which the fuel is hydrogen has been attracting attention as an energy source that emits no carbon dioxide. A fuel cell is one kind of power generator in which a fuel gas containing hydrogen is supplied to an anode, and an oxidizing gas containing oxygen is supplied to a cathode, resulting in an electrochemical reaction caused across both electrodes to produce an electromotive force.

Among fuel cells, a polymer electrolyte fuel cell is particularly highly versatile. One polymer electrolyte fuel cell is commonly constituted of a bipolar plate, gas diffusion electrode medium, catalyst layer, electrolyte membrane, catalyst layer, gas diffusion electrode medium, and bipolar plate that are laminated in this order. Among these, the gas diffusion electrode medium needs to have gas diffusivity for allowing the gas supplied from the bipolar plate to diffuse into the catalyst layer, drainage performance for allowing water generated through the electrochemical reaction to be discharged into the bipolar plate, and electrical conductivity for allowing the resulting electric current to be taken out.

To achieve both electrical conductivity and drainage performance, a technique is used, in which electrically conductive carbon fine powder, such as carbon black, and a highly hydrophobic fluoropolymer are allowed to adhere to the gas diffusion electrode medium. For example, in Patent Literature 1, a method is disclosed, in which the gas diffusion electrode medium is allowed to achieve both drainage performance and electrical conductivity by coating one side of a glass-fiber nonwoven fabric with a fluoropolymer and carbon fine powder, and hot-pressing the resulting product to increase the density. In Patent Literature 2, carbon fiber having a short fiber length is added to a gas diffusion electrode medium containing a fluoropolymer and carbon fine powder as main components, to enhance the electrical conductivity.

Citation List

Patent Literature

Patent Literature 1: JP2010-192350A
Patent Literature 2: WO2010/050219

SUMMARY OF INVENTION

Technical Problem

With the gas diffusion electrode medium in Patent Literature 1, having a high density allows the gas diffusion electrode medium to achieve a high electrical conductivity, and simultaneously to be inhibited from deflection, but because of this, the porosity in the medium is decreased, not making it possible to obtain sufficient gas diffusivity.

The gas diffusion electrode medium in Patent Literature 2 contains a fluoropolymer and carbon fine powder as main components, has a low spring property in the thickness direction of the medium, and thus, cannot absorb a dimensional change of the electrolyte membrane, causing a concern that the electrolyte membrane may be subjected to excessive pressure.

An object of the present invention is to provide an electrode substrate that maintains electrical conductivity and achieves both a high drainage performance and any one of a high gas diffusivity and spring property.

Solution to Problem

To solve the above-described problems, an electrode substrate according to the present invention is an electrode substrate including a carbon fiber sheet having pores filled with a fluoropolymer and carbon fine powder,

wherein, in terms of a fluorine/carbon ratio (F/C) measured by scanning electron microscopy-energy dispersive X-ray spectroscopy, the ratio of the smallest value ($F/C_{min}$) to the largest value ($F/C_{max}$) of the average value (F/C-1) in one surface of the electrode substrate, the average value (F/C-2) in the central plane in the thickness direction, and the average value (F/C-3) in the other surface is 0.80 or more, and

wherein, in a pore size distribution measured by a mercury intrusion method, the electrode substrate has at least a first peak present in the range of pore size of 0.5 $\mu$m or more and less than 120 $\mu$m and a second peak present in the range of pore size of 10 nm or more and less than 0.5 $\mu$m, and the ratio (V1/V2) of the peak volume (V1) of the first peak to the peak volume (V2) of the second peak is 1.0 to 7.0.

In addition, a method of producing an electrode substrate according to the present invention includes:

a dipping process of dipping a carbon fiber sheet in a dispersion liquid containing a fluoropolymer and carbon fine powder; and

an annealing process of melting the fluoropolymer contained in the dispersion liquid used for dipping in the dipping process.

Advantageous Effects of Invention

Using an electrode substrate according to the present invention for a gas diffusion electrode makes it possible to achieve both electrical conductivity and drainage performance, gas diffusivity and a spring property.

DESCRIPTION OF EMBODIMENTS

Below, the present invention will be described in detail. An electrode substrate according to the present invention is suitably used particularly for a gas diffusion electrode of a polymer electrolyte fuel cell, and thus, in some cases in the present DESCRIPTION, the effects of the electrode substrate used as gas diffusion electrode are described as the effects of the electrode substrate in a specific aspect. In addition, in the present DESCRIPTION, "to" may mean a range of values containing the upper-limit and lower-limit boundary values of the range.

<Electrode Substrate>

As used herein, the "carbon fiber sheet" refers to a structure having: a network structure constituted essentially by carbon fibers; and a porous structure composed of pores among the carbon fibers. Specific examples of the carbon fiber sheet include carbon fiber paper materials, woven fabrics, and nonwoven fabrics. Among these, the carbon fiber sheet is particularly preferably a carbon fiber paper material because such a material has excellent characteristics to absorb a dimensional change in the through-plane direction of the electrolyte membrane, that is, "springiness". Here, the carbon fiber paper material refers to a structure in which carbon fibers are dispersed randomly in a two-dimensional plane.

The carbon fiber paper material can be produced by a wet papermaking method in which the material is produced through dispersing carbon fibers in liquid or a dry papermaking method in which the material is produced through dispersing carbon fibers in air. Among these, a wet papermaking method is preferably used because of the excellent productivity. The carbon fiber paper material may be made by mixing carbon powder and an organic fiber to enhance the electrical conductivity and drainage performance of the gas diffusion electrode medium. In addition, papermaking may be performed using, as a binder, an organic polymer such as polyvinyl alcohol, polyvinyl acetate, polyacrylonitrile, or cellulose to make it easier to enhance the morphology retention and ease of handling.

As described above, a carbon fiber sheet according to the present invention, without limitation to a carbon fiber paper material, may contain a binder for bonding carbon fibers with each other. On the other hand, an electrode substrate according to the present invention preferably does not contain a thermosetting resin as a binder for bonding carbon fibers constituting a carbon fiber sheet, and more preferably contains a binder composed of only a thermoplastic resin. Not containing a thermosetting resin as a binder is advantageous in that, after a binder undergoes a burn-out treatment, carbon fibers are more easily separated, collected, and utilized again.

Examples of carbon fibers constituting a carbon fiber sheet include, but are not limited particularly to, polyacrylonitrile (PAN)-based, pitch-based, and rayon-based carbon fibers, and the like. Among these, PAN-based carbon fibers or pitch-based carbon fibers are preferably used because of the excellent mechanical strength.

In the case of a carbon fiber paper material in a most preferable aspect, the average diameter of the monofilaments of the carbon fibers (hereinafter referred to as a "carbon fiber diameter") is preferably in the range of from 3 to 20 $\mu$m, more preferably in the range of from 5 to 10 $\mu$m. In a case where the carbon fiber diameter is 3 $\mu$m or more, more preferably 5 $\mu$m or more, the size of the pore is larger, and the drainage performance is better. On the other hand, in a case where the carbon fiber diameter is 20 $\mu$m or less, more preferably 10 $\mu$m or less, unevenness in the thickness is smaller, and the thickness of the electrode substrate is more easily controlled within the below-described preferable range. The carbon fiber diameter is determined as follows: the carbon fibers are magnified 1000 times under a microscope such as a scanning electron microscope, and photographed; 30 monofilaments are randomly selected; the diameters of the monofilaments are measured; and the average of the measured values is used.

In addition, in the case of a carbon fiber paper material, the average fiber length of the monofilaments of the carbon fibers constituting the carbon fiber paper material (hereinafter referred to as a "carbon fiber length") is preferably in the range of from 5 to 20 mm, more preferably in the range of from 5 to 15 mm. The carbon fiber length of 5 mm or more makes it more likely that the carbon fiber paper material has an excellent spring property, mechanical strength, electrical conductivity, and thermal conductivity. On the other hand, the carbon fiber length of 20 mm or less, more preferably 15 mm or less, allows the carbon fibers to have excellent dispersibility during papermaking, and makes it easier to obtain a carbon fiber paper material uniform in quality. The carbon fiber length is determined as follows: the carbon fibers are magnified 50 times under a microscope such as a scanning electron microscope, and photographed; 30 monofilaments are randomly selected; the lengths of the monofilaments are measured; and the values measured are averaged.

An electrode substrate according to the present invention includes a carbon fiber sheet having pores filled with a fluoropolymer and carbon fine powder, wherein, in terms of a fluorine/carbon ratio (F/C) measured by scanning electron microscopy-energy dispersive X-ray spectroscopy (SEM-EDX analysis), the ratio of the smallest value ($F/C_{min}$) to the largest value ($F/C_{max}$) of the average value (F/C-1) in one surface of the electrode substrate, the average value (F/C-2) in the central plane in the thickness direction, and the average value (F/C-3) in the other surface is 0.80 or more, more preferably 0.85 or more. The average values of F/C, that is, F/C-1 to F/C-3 on the respective surfaces can be measured by the below-described method described in EXAMPLES. That F/C-1 to F/C-3 satisfy the above-described relation means that, in an electrode substrate according to the present invention, the pores of the carbon fiber sheet are filled generally uniformly with a fluoropolymer and carbon fine powder in the thickness direction. Accordingly, in some cases in the present DESCRIPTION, that F/C-1 to F/C-3 satisfy the above-described relation is expressed by saying that a fluoropolymer and carbon fine powder are uniform in the thickness direction. Having the fluoropolymer uniformly in the thickness direction makes it for the electrode substrate to be less prone to retain liquid water therein, and allows the electrode substrate to have an excellent drainage performance. In addition, having the carbon fine powder uniformly in the thickness direction allows a conductive path to be formed uniformly in the electrode substrate, and allows the electrode substrate to have an excellent electrical conductivity. Examples of a method of bringing the ratio of the smallest value ($F/C_{min}$) to the largest value ($F/C_{max}$) within the above-described range include a method in which, as in the below-described method of producing an electrode substrate according to the present invention, a carbon fiber sheet is dipped in a dispersion liquid containing a fluoropolymer and carbon fine powder to bring the fluoropolymer and the carbon fine powder simultaneously into contact with the carbon fiber sheet. Examples of a more preferable method include a method in which the carbon fine powder in a sufficient amount with respect to the fluoropolymer is allowed to be present in the dispersion liquid.

A fluoropolymer to be used is two or more resins selected from the group consisting of polytetrafluoroethylene (PTFE), tetrafluoroethylene hexafluoropropylene copolymers (FEP), perfluoro-alkoxy fluoropolymers (PFA), ethylene tetrafluoroethylene copolymers (ETFE), polyvinylidene fluoride (PVDF), and polyvinyl fluoride (PVF). Among these, PTFE or FEP, which develops a strong hydrophobicity, is preferable.

In an electrode substrate according to the present invention, the amount of the fluoropolymer is preferably 10 wt% or more, more preferably 15 wt% or more. Having the fluoropolymer in an amount of 10 wt% or more, more preferably 15 wt% or more, enables the electrode substrate to maintain mechanical strength, have a high drainage performance, and thereby achieve an excellent cell performance in the range of high current density at low temperature. On the other hand, the amount of the fluoropolymer is preferably 40 wt% or less, preferably 30 wt% or less. Having the fluoropolymer in an amount of 40 wt% or less, preferably 30 wt% or less, enables the conductive resistance of the electrode substrate to be kept low, and achieve a more excellent cell performance.

Here, examples of the carbon fine powder to be preferably used include carbon blacks such as furnace black, acetylene black, lamp black, and thermal black. In addition, to obtain pores having a size of 10 nm to 0.5 $\mu$m, carbon black having an average primary particle size of 25 to 60 nm is more preferably used, and carbon black having an average primary particle size of 25 to 50 nm is still more preferably used. More specifically, carbon black having a chain-like structure in the form of primary particles such as tied in a row is preferably used. The structures are entwined to be bonded with each other via a fluoropolymer, thereby forming pores having a diameter of 10 nm to 0.5 $\mu$m. In this regard, examples of the carbon fine powder that can be used include nanocarbon materials, such as carbon nanotubes and carbon nanofibers. In addition, graphite such as scale-like graphite, vein graphite, amorphous graphite, synthetic graphite, expandable graphite, and flake graphite can be used in combination with carbon black or a nanocarbon material. Adding graphite having a higher electrical conductivity than a nanocarbon material can further enhance the electrical conductivity of the electrode substrate.

In an electrode substrate according to the present invention, the amount of the carbon fine powder is preferably 40 wt% or more and 70 wt% or less, more preferably 45 wt% or more and 60 wt% or less. Having the carbon fine powder in an amount of 40 wt% or more, more preferably 45 wt% or more, can enhance the electrical conductivity of the electrode substrate. On the other hand, having the carbon fine powder in an amount of 70 wt% or less increases the volume of the pores having a diameter of 0.5 µm to 120 µm necessary for gas diffusivity, and tends to enhance the gas diffusivity.

A fluoropolymer has a low electrical conductivity, but having the fluoropolymer in mixture with carbon fine powder in a predetermined amount allows the carbon fine powder to become a conductive path, and affords a sufficient electrical conductivity to the electrode substrate. The electrical conductivity of an electrode substrate according to the present invention is secured by virtue of the carbon fine powder contained together with the fluoropolymer, thus eliminating the necessity of a baking process conventionally performed at a high temperature of more than 1000°C to carbonize a binding resin for the carbon fibers constituting the carbon fiber sheet, and thus making it possible to reduce the production cost.

More specifically, in a pore size distribution, the electrode substrate according to the present invention has at least a first peak present in the range of pore size of 0.5 µm or more and less than 120 µm and a second peak present in the range of pore size of 10 nm or more and less than 0.5 µm, and the ratio (V1/V2) of the peak volume (V1) of the first peak to the peak volume (V2) of the second peak is 1.0 to 7.0. The first peak is mainly derived from the pores among the carbon fibers constituting the carbon fiber sheet, and the second peak is mainly derived from the pores of the carbon fine powder. Having V1/V2 larger than 7.0 increases the pore size inside the electrode substrate, decreases the density of the conductive path composed of carbon fine powder, and worsens the electrical conductivity of the electrode substrate. Having V1/V2 at 7.0 or less allows water vapor to retained near the electrolyte membrane, and makes it possible to maintain the humidity of the electrolyte membrane. On the other hand, having V1/V2 at less than 1.0 decreases the pore volume for allowing fuel gas to pass therethrough, and decreases the gas diffusivity. Examples of a method of bringing V1/V2 within the above-described range include a method in which the amount of the carbon fine powder contained in the electrode substrate is adjusted. Specifically, increasing the amount of the carbon fine powder results in forming pores derived from the carbon fine powder, and the volume of the pores corresponds to V2. In addition, increasing the amount of the carbon fine powder causes the pores of the pore volume corresponding to V1 to be filled up. Because of this, increasing the amount of the carbon fine powder can decrease V1/V2. In addition, decreasing the amount of the carbon fine powder can increase V1/V2.

An electrode substrate according to the present invention preferably contains carbon fine powder in an amount of 200 parts by weight or more and 400 parts by weight or less, more preferably contains 250 parts by weight or more and 350 parts by weight or less, with respect to 100 parts by weight of a fluoropolymer. Containing the carbon fine powder in an amount of 200 parts by weight or more, more preferably 250 parts by weight or more, with respect to 100 parts by weight of the fluoropolymer can enhance the electrical conductivity of the electrode substrate. In addition, containing the carbon fine powder in an amount of 400 parts by weight or less, more preferably 350 parts by weight or less, with respect to 100 parts by weight of the fluoropolymer makes it easier to distribute the carbon fine powder uniformly in the electrode substrate.

In this regard, for the same reason as described about the above-described binder, an electrode substrate according to the present invention preferably does not contain a thermosetting resin as a component with which the pores of the carbon fiber sheet are to be filled. That is, when the electrode substrate undergoes a burn-out treatment under the air atmosphere at 500°C for 1 hour, it is preferable that the carbon fibers constituting a carbon fiber sheet are not bonded sufficiently with each other, and thus that the carbon fibers are ready to be separated and collected. Among others, it is more preferable that the binder with which the pores of the carbon fiber sheet are to be filled is composed of only a thermoplastic resin.

When the electrode substrate undergoes a burn-out treatment, the binder keeping the carbon fibers fixed to each other and the fluoropolymer are burnt out, and thus the electrode substrate, when allowed to contain no thermosetting resin, increases in thickness. After the burn-out treatment is performed under the air atmosphere at 500°C for 1 hour, the no-pressure thickness of an electrode substrate according to the present invention is preferably 1.5 times or more the no-pressure thickness before the burn-out treatment, more preferably 2 times or more. The upper limit is usually, but not limited particularly to, approximately 5 times. Such a change in thickness demonstrates that the carbon fibers constituting the electrode substrate are not bonded sufficiently with each other, and thus that the carbon fibers are ready to be separated and collected. The no-pressure thickness can be measured by the below-described method described in EXAMPLES.

The thickness of the electrode substrate is preferably 50 to 230 µm, more preferably 70 to 180 µm. The thickness of 230 µm or less, more preferably 180 µm or less, allows the electrical conductivity to be high, and in addition, makes it easy for produced water to be discharged. Furthermore, such a thickness makes it easier to decrease the size of the whole fuel cell. On the other hand, the thickness of 50 µm or more, more preferably 70 µm or more, allows the inside gas diffusion in the in-plane direction to be performed efficiently, and makes it easier to enhance the cell performance.

The density of the electrode substrate is preferably 0.50 g/cm$^3$ or less, more preferably 0.40 g/cm$^3$ or less. The density of 0.50 g/cm$^3$ or less, more preferably 0.40 g/cm$^3$ or less, allows the gas diffusivity to increase, makes it easier to discharge the liquid water into the flow channel, thus enhances the cell performance, and in addition, enhances the spring property. On the other hand, the density of the electrode substrate is preferably 0.20 g/cm$^3$ or more, more preferably 0.25 g/cm$^3$. The electrode substrate having a density of 0.20 g/cm$^3$ or more, more preferably 0.25 g/cm$^3$ or more, has

an increased mechanical strength and, allows easier handling.

In an electrode substrate according to the present invention, the short circuit current density of the carbon fiber sheet is preferably 80 mA/cm$^2$ or less, more preferably 50 mA/cm$^2$ or less. The short circuit current density of 80 mA/cm$^2$ or less, more preferably 50 mA/cm$^2$ or less makes it less likely to cause a short circuit in the electrolyte membrane in a cell fuel cell during power generation, and can prevent an abrupt decrease in voltage. The smaller the short circuit current density of the carbon fiber sheet, the more preferable. The density is most preferably 0 mA/cm$^2$. Examples of a method of bringing the short circuit current density of the carbon fiber sheet within the above-described range include a method in which the below-described molding process is adopted to smoothen the surface of the carbon fiber sheet.

<Method of Producing Electrode Substrate>

A method of producing an electrode substrate according to the present invention preferably includes: a dipping process of dipping a carbon fiber sheet in a dispersion liquid containing a fluoropolymer and carbon fine powder; and an annealing process of melting the fluoropolymer contained in the dispersion liquid used for dipping in the dipping process.

[Dipping process]

In the dipping process, a carbon fiber sheet is dipped in a dispersion liquid containing a fluoropolymer and carbon fine powder. Regarding the carbon fiber sheet, the fluoropolymer, and the carbon fine powder, see the description above.

Examples of a conceivable method of impregnating the carbon fiber sheet with a dispersion liquid include a method in which the carbon fiber sheet is coated with the dispersion liquid. However, in the case of coating, it is unavoidable that the fluoropolymer and the carbon fine powder contained in the dispersion liquid are more in the coated side, and less in the other side. In a case where a heating treatment, such as hot-pressing, is performed after the coating, the fluoropolymer is melted and moves to some degree from the coated side to the other side, but the carbon fine powder, even when heated, is not melted, and thus, not easily moves, being difficult to have uniformly in the whole electrode substrate. Dipping the carbon fiber sheet in a dispersion liquid containing a fluoropolymer and carbon fine powder enables the carbon fine powder to be present uniformly in both sides of the electrode substrate.

[Molding process]

A method of producing an electrode substrate according to the present invention preferably includes a molding process in which, after the dipping process and before the annealing process, heating and pressing are performed at a temperature of 100°C or more. That is, it is also preferable that the carbon fiber sheet dipped in the fluoropolymer and the carbon fine powder as above-described is molded under heating and pressing after the dipping process and before the annealing process. This process is referred to as a molding process in the present DESCRIPTION. This molding process makes it possible to more accurately control the thickness and porosity of the resulting electrode substrate, and allowing the fluoropolymer in the surface of the carbon fiber sheet to be partially melted and simultaneously pressed smoothens the surface of the carbon fiber sheet. When the electrolyte membrane is sandwiched between electrode substrates to be assembled into a fuel cell, an aggregate of the fluoropolymer and the carbon fine powder, containing a salient portion, can be responsible for breaking through the electrolyte membrane, and causing a short circuit. Smoothening the surface of the carbon fiber sheet can significantly inhibit this short circuit. In the molding process, the heating temperature is preferably 100 to 250°C. In addition, the pressure to be applied is preferably 0.01 to 5 MPa.

[Annealing process]

The carbon fiber sheet that was dipped in a dispersion liquid containing a fluoropolymer and carbon fine powder, and as required, underwent the molding process is used in the next annealing process. The annealing temperature in the annealing process is preferably 300°C or more and 400°C or less. By annealing at a temperature of 300°C or more, the fluoropolymer contained in the dispersion liquid used for impregnation is melted and wetly spread, giving hydrophobicity to the whole electrode substrate. In addition, the temperature of 400°C or less eliminates the necessity of a large-scale heating furnace, and can significantly decrease the production cost of the electrode substrate.

In a method of producing an electrode substrate according to the present invention, the amount of the carbon fine powder is preferably 40 wt% or more and 70 wt% or less in 100 wt% of the whole electrode substrate. The reason why the amount of the carbon fine powder contained in the electrode substrate is preferably within the above-described range, a more suitable range, and the like are as above-described. Examples of a method of bringing, within the above-described range, the amount of the carbon fine powder contained in the electrode substrate include; a method in which the dispersion liquid in the dipping process is allowed to contain the carbon fine powder in an amount necessary for the amount of the carbon fine powder in the electrode substrate to be brought within the above-described range; and the like.

In a method of producing an electrode substrate according to the present invention, the electrode substrate preferably contains the carbon fine powder in an amount of 200 parts by weight or more and 400 parts by weight or less with respect to 100 parts by weight of the fluoropolymer. The reason why the relative amounts of the carbon fine powder and the fluoropolymer that are contained in the electrode substrate are preferably within the above-described range and a more suitable range are as above-described. Examples of a method of bringing, within the above-described range, the relative amounts of the carbon fine powder and the fluoropolymer contained in the electrode substrate include a method in which, in the dispersion liquid in the dipping process, the relative amount of the fluoropolymer is made larger than the relative amount in the electrode substrate. Usually, the amount of the carbon fine powder is hardly decreased even in the annealing process, but the amount of the fluoropolymer is significantly decreased in the annealing process. Accordingly, allowing the amount of the fluoropolymer contained in the dispersion liquid to be larger than the relative amount in the electrode substrate of interest enables the relative amount in the electrode substrate to be within the above-described range. The degree of decrease in the amount of the fluoropolymer in the annealing process varies with the annealing conditions, and thus, the amount of the fluoropolymer contained in the dispersion liquid is suitably adjusted in accordance with the annealing conditions.

EXAMPLES

Next, with reference to Examples, an electrode substrate according to the present invention will be described specifically, and the electrode substrate according to the present invention is not limited to these Examples. The materials, the producing method and evaluating method for an electrode substrate, and the evaluating method for the cell performance of a fuel cell, which were used in Examples, will be described below.

<Pore Size Distribution>

Five measurement samples cut to 6 $cm^2$ out of an electrode substrate were provided, and measured by a mercury intrusion method in the range of measurement pressure of from 6 kPa to 123 MPa (a pore size of 10 nm to 200 $\mu$m). From the pore size distribution obtained from the measurement, the average value of the peak sizes was determined. In this regard, in a case where a plurality of peaks appeared in a region of near pore sizes in one sample, the peak size of the highest peak was adopted. The measurement device used was AutoPore 9520 manufactured by Shimadzu Corporation. Here, the peak of the pore size was as follows: on the curve of the log differentiation of the pore volume distribution graph obtained in the measurement by the mercury porosimeter, the maximal point in the region concerned (the highest maximal point in the case of several maximal points) was considered as the peak in the region, and its position was used as the pore size.

The peak volume of the pore was obtained as follows: the integration data of the small pore size was subtracted from the integrated volume value of the large pore size of the measuring object in the integration data in which the log differentiation of the pore volume distribution graph was integrated with respect to the pore size; the resulting value was divided by the weight of the measurement sample; and the results of the five samples were averaged. For example, the peak volume in the second region (the region of 10 nm or more and less than 0.5 $\mu$m) was determined by subtracting the integration data of less than 10 nm from the integration data of less than 0.5 $\mu$m, and dividing the result by the weight of the sample.

<Thickness and Density of Electrode Substrate>

The thickness of an electrode substrate was measured with a load of 0.15 MPa applied to the electrode substrate, using a digital thickness indicator "DIGIMICRO" manufactured by Nikon Corporation. In addition, the density was calculated from the weight and area of the electrode substrate.

<Fluorine/Carbon Ratio (F/C)>

[Average Values (F/C-1 and F/C-3) of F/C in Surface of Electrode Substrate]

By performing an SEM-EDX analysis under conditions at an accelerating voltage of 10 kV and at a magnifying power of 400 times, five elemental mapping images of each of carbon and fluorine in one surface and the other of an electrode substrate were obtained. The ratio of the average value of signal strength of the fluorine to the average value of signal strength of the carbon was calculated. The scanning electron microscopy used was S-5500 manufactured by Hitachi, Ltd., and an energy dispersive X-ray spectrometer used was EX-220SE manufactured by Horiba, Ltd.

[Average Value (F/C-2) F/C in Central Plane of Electrode Substrate in Thickness Direction]

Under cooling with a cryo-ion-beam cross-section processing device, the thickness of the electrode substrate was halved to expose the face at and around the midpoint of the thickness. Then, performing the measurement of the thickness in the same manner as above-described, the thickness of one point was measured, verifying that the thickness of the electrode substrate after the cross-section processing was half of the thickness of the electrode substrate before the processing. Then, F/C was calculated in the same manner as in the measurement of the surface of the electrode substrate.

<No-pressure Thickness>

A measurement was made using a One-shot 3D Measuring Microscope VR-3000 manufactured by Keyence Corporation. An electrode substrate cut to 30 mm × 30 mm was placed on a SUS plate, and the SUS plate and the electrode substrate were set in such a manner that the SUS plate was included in one half of the field of view of observation, and that the electrode substrate was included in the other. A 3D measurement was performed at a multiplying factor of 12 times. The average height of each of the SUS plate region and the electrode substrate region in the image obtained was calculated. A difference between the average height of the SUS plate and the average height of the electrode substrate was regarded as the no-pressure thickness of the electrode substrate. In the same manner, the no-pressure thickness of the electrode substrate was measured also after the electrode substrate was heated under the air atmosphere at 500°C for 1 hour in a burn-out treatment.

<Conductive Resistance>

The conductive resistance of the electrode substrate in the through-plane direction was determined as follows: an electrode substrate was cut to 30 mm × 30 mm, sandwiched between two gold-plated plates, and subjected to a uniform surface pressure of 1.0 MPa; at this time, an electric current of 1.0 A was applied, during which the resistance was measured; and the measurement result was multiplied by the area of the electrode substrate.

<Spring Property>

The spring property of the electrode substrate in the through-plane direction was determined as follows: an electrode substrate was cut to 30 mm × 30 mm, sandwiched between two gold-plated plates, and subjected to a uniform surface pressure of 1.0 MPa, during which the thickness was measured; then, the thickness was measured under a uniform surface pressure of 2.0 MPa; and a calculation was made in accordance with the following formula. The smaller the value of the spring property, the more excellent the spring property.

$$\text{(Spring Property)} = \text{(Tthickness at 2.0 MPa)} / \text{(Thickness at 1.0 MPa)}$$

<Gas Diffusivity>

Using a water vapor/gas/water vapor permeation diffusion evaluating device (MVDP-200C) manufactured by Seika Corporation, a gas whose diffusivity was desired to be measured was allowed to flow on one side (primary side) of the electrode substrate, and nitrogen gas was allowed to flow on the other side (secondary side). With a pressure difference controlled at or near 0 Pa (0 ± 3 Pa) between the primary side and the secondary side (that is, almost no gas flowed owing to a difference in pressure, and a phenomenon of movement of gas occurred only owing to the molecular diffusion), a gas concentration meter at the secondary side was used to measure the concentration of the gas when the equilibrium was reached. This value (%) was regarded as an index for gas diffusivity in the thickness direction.

<Short Circuit Current Density>

A polymer electrolyte membrane "Nafion" (registered trademark) NR212 (manufactured by DuPont de Nemours, Inc.) (having a thickness of 50 $\mu$m) was sandwiched at both sides between the electrode substrates produced. Here, the electrode substrates, each made a 4 cm square, were superposed on the respective sides of the polymer electrolyte membrane made a 6 cm or more square in such a manner that the sides of the polymer electrolyte membrane were in parallel with the respective sides of the electrode substrate, and that the center of the polymer electrolyte membrane was congruent with the center of the electrode substrate. The layered piece of the polymer electrolyte membrane and the electrode substrate were sandwiched between two gold-plated stainless steel block electrodes (the sandwiched face was a 3 cm square), and pressed with a pressure of 4 MPa applied to a 9 cm$^2$ area of the electrode substrate. When this was done, the layered piece was sandwiched in such a manner that the sides of the sandwiching face of the stainless steel block electrode were in parallel with the respective sides of the electrode substrate, and that the center of the stainless steel block electrode was congruent with the center of electrode substrate. A direct-current voltage of 2 V was applied across the gold-plated stainless steel block electrodes using a digital multi-meter (KEITHLEY Model 196 SYSTEM DMM), an electric current across the electrodes was measured, and the value obtained was regarded as a short-circuit electric current. This measurement was repeated 10 times, and the average value of the measurements was divided by the area 9 cm$^2$ to which the voltage was applied in the electrode was regarded as the short circuit current density.

<Cell Performance of Polymer Electrolyte Fuel Cell>

Platinum-supported carbon (having a platinum supporting amount of 50 mass%, manufactured by Tanaka Kikinzoku Kogyo K.K.) in an amount of 1.00 g, 1.00 g of purified water, 8.00 g of a "Nafion" (registered trademark) solution (5.0 mass% "Nafion" (registered trademark), manufactured by Aldrich), and 18.00 g of isopropyl alcohol (manufactured by Nacalai Tesque, Inc.) were added in this order to produce a catalyst paste.

Next, a "NAFLON" (registered trademark) PTFE tape "TOMBO" (registered trademark) No.9001 (manufactured by Nichias Corporation) cut to 5 cm × 5 cm was coated with the catalyst paste using a spray, and the paste was dried at ordinary temperature to produce a catalyst layer-coated PTFE sheet containing platinum in an amount of 0.3 mg/cm$^2$. Subsequently, a polymer electrolyte membrane "Nafion" (registered trademark) NRE-211CS (manufactured by DuPont de Nemours, Inc.) cut to 8 cm × 8 cm was sandwiched between two catalyst layer-coated PTFE sheets, and the resulting piece was pressed at a temperature of 130°C for 5 minutes while pressed at 5 MPa using a pressing machine with a flat plate, so that the catalyst layer was transferred to the polymer electrolyte membrane. After the pressing, the PTFE sheet was peeled off to produce a catalyst layer-coated polymer electrolyte membrane.

Next, the catalyst layer-coated polymer electrolyte membrane was sandwiched between two electrode substrates produced in each of Examples and Comparative Examples, and each cut to 5 cm × 5 cm. The resulting piece was pressed at a temperature of 130°C for 5 minutes while pressed at a 3 MPa using a pressing machine with a flat plate, whereby a membrane electrode assembly was produced. The resulting membrane electrode assembly was incorporated in a fuel cell evaluation unit cell, with which the voltage was measured while the current density was varied. Here, the bipolar plate used was a serpentine type bipolar plate having one flow channel, and having a channel width, a channel depth, and a rib width that are each 1.0 mm. In addition, an evaluation was performed with no-pressure hydrogen supplied at the anode side, and with no-pressure air supplied at the cathode side.

To verify the drainage performance of the electrode substrate, hydrogen and air were humidified through a humidification pot set at a temperature of 70°C. During this, the humidity was 100%. In addition, the utilization ratios of hydrogen and oxygen in air were 70 mol% and 40 mol% respectively, and the temperature of the cell was 70°C. The output voltage was measured at a current density of 1.5 A/cm$^2$, and used as an index for drainage performance.

(Example 1)

Polyacrylonitrile-based carbon fibers manufactured by Toray Industries, Inc. were cut to have a length of 7 mm, dispersed in water to be made into paper, further dipped in a water-based dispersion liquid of 10 wt% polyvinyl alcohol, and dried to obtain a continuous carbon fiber sheet containing carbon fibers having an areal weight of approximately 20 g/m$^2$. The sheet was wound up in roll form.

A dispersion liquid (liquid resin composition) was provided, in which a water dispersion liquid of a PTFE resin ("POLYFLON" (registered trademark) PTFE Dispersion D-210C (manufactured by Daikin Industries, Ltd.)), acetylene black "DENKA BLACK" (registered trademark) (manufactured by Denka Company Limited), a surfactant "TRITON" (registered trademark) X-100 (manufactured by Nacalai Tesque, Inc.), and water were mixed in such a manner that the ratio of the PTFE resin: acetylene black: surfactant water was 6:11:1:82 (a ratio by weight). The above-described carbon fiber sheet cut to 10 cm × 10 cm was dipped in the dispersion liquid, pulled up, then squeezed with a mangle to remove surplus liquid, and then dried at a temperature of 100°C for 10 minutes.

Next, the carbon fiber sheet, after being dipped in the dispersion liquid, underwent a heating and pressing treatment at 180°C for 5 minutes while pressed using a pressing machine with a flat plate. In this regard, during the heating and pressing treatment, a spacer was disposed in the pressing machine with a flat plate, and the distance between the upper and lower press face plates was adjusted in such a manner that the thickness would become 150 μm after the heating and pressing treatment. Then, the resulting piece was further annealed at 380°C for 10 minutes to afford an electrode substrate.

(Example 2)

An electrode substrate was obtained in the same manner as in Example 1 except that the carbon fiber sheet was dipped in a liquid resin composition in which the PTFE resin, the acetylene black, the surfactant, and the water were mixed at 8:15:1:76 (a ratio by weight).

(Example 3)

An electrode substrate was obtained in the same manner as in Example 1 except that the spacer for the pressing machine with a flat plate was changed to adjust the distance between the upper and lower press face plates in such a manner that, when the heating and pressing treatment was performed, the thickness after the treatment became 85 $\mu$m, and thus, that the density of the carbon fiber sheet after the annealing became 0.60 g/cm$^3$.

(Comparative Example 1)

Acetylene black, graphite (scale-like graphite, having an average particle diameter of 15 $\mu$m, manufactured by Wako Pure Chemical Industries, Ltd.), VGCF (having a fiber diameter of 0.15 $\mu$m and a fiber length of 15 $\mu$m, manufactured by Showa Denko K.K.), a surfactant, and water were mixed, a water dispersion liquid of PTFE was further added, and the resulting mixture was stirred. The PTFE resin, the graphite, the acetylene black, the VGCF, the surfactant, and the water were mixed at 4:21:13:4:1:57 (a ratio by weight).
The kneaded material obtained in this manner was rolled into a sheet form using stretching roller, and the kneaded material formed into a sheet form was annealed at 380°C for 10 minutes.
The kneaded material after the annealing was rolled again using a stretching roller, so that the thickness was adjusted to obtain an electrode substrate.

(Comparative Example 2)

An electrode substrate was obtained in the same manner as in Example 1 except that the carbon fiber sheet was coated with the liquid resin composition using a die coater.

(Comparative Example 3)

An electrode substrate was obtained in the same manner as in Example 1 except that the carbon fiber sheet was dipped in a liquid resin composition in which the PTFE resin, the acetylene black, the surfactant, and the water were mixed at 9:9:1:81 (a ratio by weight).

(Example 4)

An electrode substrate was obtained in the same manner as in Example 1 except that the pressing with the pressing machine with a flat plate was not performed.
The constitution of each of the electrode substrates and the evaluation results in Examples and Comparative Examples are tabulated in Table 1.

[Table 1]

| | | Unit | Example 1 | Example 2 | Example 3 | Example 4 | Comparative Example 1 | Comparative Example 2 | Comparative Example 3 |
|---|---|---|---|---|---|---|---|---|---|
| Constitution of electrode substrate | Method of adhesion | - | immersion | immersion | immersion | immersion | immersion | coating | immersion |
| | F/C-1 | - | 0.29 | 0.33 | 0.28 | 0.25 | 0.12 | 0.38 | 0.38 |
| | F/C-2 | - | 0.25 | 0.29 | 0.26 | 0.22 | 0.10 | 0.31 | 0.35 |
| | F/C-3 | - | 0.28 | 0.30 | 0.29 | 0.24 | 0.11 | 0.25 | 0.36 |
| | $(F/C_{min}) / (F/C_{max})$ | - | 0.86 | 0.88 | 0.90 | 0.88 | 0.83 | 0.66 | 0.92 |
| | V1 | mL/g | 65.6 | 44.8 | 28.5 | 76.1 | 4.2 | 61.5 | 52.2 |
| | V2 | mL/g | 13.9 | 15.3 | 9.2 | 11.2 | 21.0 | 12.1 | 7.0 |
| | V1/V2 | - | 4.7 | 2.9 | 3.1 | 6.8 | 0.2 | 5.1 | 7.5 |
| | No-pressure thickness | μm | 397 | 412 | 225 | 431 | 192 | 423 | 405 |
| | Density | g/cm$^3$ | 0.34 | 0.44 | 0.60 | 0.22 | 0.40 | 0.36 | 0.38 |
| | Length of carbon fiber | mm | 7 | 7 | 7 | 7 | 0.15 | 7 | 7 |
| | Amount of carbon fine powder contained in electrode substrate | % | 48 | 58 | 48 | 48 | 80 | 48 | 0.375 |
| | Amount of fluoropolymers contained in electrode substrate | % | 16 | 20 | 16 | 16 | 10 | 16 | 0.25 |
| | Amount of carbon fine powder with respect to 100 parts by weight of fluoropolymers | parts by weight | 300 | 290 | 300 | 300 | 800 | 300 | 150 |
| Evaluation results | No-pressure thickness (before annealing) T 1 | μm | 397 | 412 | 225 | 431 | 192 | 423 | 405 |
| | No-pressure thickness (after annealing) T2 | μm | 861 | 884 | 721 | 891 | 276 | 841 | 859 |

EP 4 318 684 A1

(continued)

| | Unit | Example 1 | Example 2 | Example 3 | Example 4 | Comparative Example 1 | Comparative Example 2 | Comparative Example 3 |
|---|---|---|---|---|---|---|---|---|
| T2/T1 | - | 2.2 | 2.1 | 3.2 | 2.1 | 1.4 | 2.0 | 2.1 |
| Conductive resistance | $m\Omega \cdot cm^2$ | 13.7 | 17.8 | 12.0 | 19.6 | 10.1 | 15.2 | 21.0 |
| Spring property | % | 88 | 90 | 93 | 81 | 95 | 92 | 91 |
| Gas diffusivity | % | 31.3 | 30.5 | 29.2 | 32.1 | 29.8 | 31.1 | 29.5 |
| Short circuit current density | $mA/cm^2$ | 28 | 19 | 11 | 91 | 2 | 12 | 16 |
| Cell performance, Voltage @ 1.5 $A/cm^2$ | V | 0.57 | 0.55 | 0.51 | 0.52 | 0.45 | 0.47 | 0.45 |

Industrial Applicability

A gas diffusion electrode medium produced using an electrode substrate according to the present invention can be suitably used as a gas diffusion electrode for a fuel cell, particularly a polymer electrolyte fuel cell. In addition, a gas diffusion electrode medium produced using an electrode substrate according to the present invention can achieve both electrical conductivity and any one of drainage performance, gas diffusivity, and spring property, and thus makes it possible to produce a polymer electrolyte fuel cell that achieves a high cell performance even in an environment of usage in which a large amount of fuel gas is supplied, and a large amount of water is generated, such as high humidity and low temperature conditions and high current density conditions.

## Claims

1.  An electrode substrate comprising a carbon fiber sheet having pores filled with a fluoropolymer and carbon fine powder,

    wherein, in terms of a fluorine/carbon ratio (F/C) measured by scanning electron microscopy-energy dispersive X-ray spectroscopy, the ratio of the smallest value ($F/C_{min}$) to the largest value ($F/C_{max}$) of the average value (F/C-1) in one surface of said electrode substrate, the average value (F/C-2) in the central plane in the thickness direction, and the average value (F/C-3) in the other surface is 0.80 or more, and
    wherein, in a pore size distribution measured by a mercury intrusion method, said electrode substrate has at least a first peak present in the range of pore size of 0.5 $\mu$m or more and less than 120 $\mu$m and a second peak present in the range of pore size of 10 nm or more and less than 0.5 $\mu$m, and the ratio (V1/V2) of the peak volume (V1) of said first peak to the peak volume (V2) of said second peak is 1.0 to 7.0.

2.  The electrode substrate according to claim 1, having a density of 0.50 $g/cm^3$ or less.

3.  The electrode substrate according to claim 1 or 2, wherein said carbon fiber sheet is a carbon fiber paper material.

4.  The electrode substrate according to any one of claims 1 to 3, wherein the amount of said carbon fine powder is 40 wt% or more and 70 wt% or less.

5.   The electrode substrate according to any one of claims 1 to 4, wherein the amount of said fluoropolymer is 10 wt% or more.

6.  The electrode substrate according to any one of claims 1 to 5, comprising said carbon fine powder in an amount of 200 parts by weight or more and 400 parts by weight or less with respect to 100 parts by weight of said fluoropolymer.

7.  The electrode substrate according to any one of claims 1 to 6, which does not comprise a thermosetting resin as a binder for bonding carbon fibers constituting said carbon fiber sheet.

8.  The electrode substrate according to any one of claims 1 to 7, wherein, after undergoing a burn-out treatment under the air atmosphere at 500°C for 1 hour, the no-pressure thickness of said electrode substrate is 1.5 times or more the no-pressure thickness before said burn-out treatment.

9.  The electrode substrate according to any one of claims 1 to 8, which does not comprise a thermosetting resin as a component with which said pores of said carbon fiber sheet are to be filled.

10. The electrode substrate according to any one of claims 1 to 9, wherein the short circuit current density of said carbon fiber sheet is 80 $mA/cm^2$ or less.

11. A method of producing an electrode substrate, comprising:

    a dipping process of dipping a carbon fiber sheet in a dispersion liquid containing a fluoropolymer and carbon fine powder; and
    an annealing process of melting said fluoropolymer contained in said dispersion liquid used for dipping in said dipping process.

12. The method of producing an electrode substrate according to claim 11, wherein the amount of said carbon fine powder is 40 wt% or more and 70 wt% or less in 100 wt% of the whole electrode substrate.

13. The method of producing an electrode substrate according to claim 11 or 12, wherein said electrode substrate comprises said carbon fine powder in an amount of 200 parts by weight or more and 400 parts by weight or less with respect to 100 parts by weight of said fluoropolymer.

14. The method of producing an electrode substrate according to any one of claims 11 to 13, comprising a molding process in which, after said dipping process and before said annealing process, heating and pressing are performed at a temperature of 100°C or more.

## INTERNATIONAL SEARCH REPORT

| International application No. |
|---|
| **PCT/JP2022/012991** |

### A. CLASSIFICATION OF SUBJECT MATTER

*H01M 4/86*(2006.01)i; *H01M 4/88*(2006.01)i; *H01M 4/96*(2006.01)i; *H01M 8/10*(2016.01)i
FI:   H01M4/86 M; H01M4/88 C; H01M4/96 M; H01M8/10 101

According to International Patent Classification (IPC) or to both national classification and IPC

### B. FIELDS SEARCHED

Minimum documentation searched (classification system followed by classification symbols)

H01M4/86; H01M4/88; H01M4/96; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-500910 A (MAGNET-MOTOR GESELLSCHAFT FUR MAGNETMOTORISCHE TECHNIK MBH) 25 January 2000 (2000-01-25) page 10, line 27 to page 11, line 5 | 11-13 |
| X | JP 2001-6698 A (FUJI ELECTRIC CO., LTD.) 12 January 2001 (2001-01-12) paragraph [0030] | 11-13 |
| A | JP 2006-339018 A (UNIV. OF YAMANASHI) 14 December 2006 (2006-12-14) paragraphs [0023], [0091], [0099], [0100], [0138], [0139] | 1-14 |
| P, A | WO 2021/070652 A1 (TORAY INDUSTRIES, INC.) 15 April 2021 (2021-04-15) | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 May 2022** | **24 May 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**
**Information on patent family members**

International application No.

**PCT/JP2022/012991**

| Patent document cited in search report | | | Publication date (day/month/year) | Patent family member(s) | | | Publication date (day/month/year) |
|---|---|---|---|---|---|---|---|
| JP | 2000-500910 | A | 25 January 2000 | US 5998057 A<br>column 5, lines 12-25<br>WO 1997/020359 A1<br>CN 1206504 A | | | |
| JP | 2001-6698 | A | 12 January 2001 | (Family: none) | | | |
| JP | 2006-339018 | A | 14 December 2006 | (Family: none) | | | |
| WO | 2021/070652 | A1 | 15 April 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010192350 A

- WO 2010050219 A